# EUROPEAN PATENT APPLICATION

(11) **EP 4 161 199 A1**
(43) Date of publication of application: **05.04.2023**
(21) Application number: 21834049.5
(22) Date of filing: 29.06.2021
(51) Int. Cl.: H04W 72/12, H04B 7/0452

(54) **DATA TRANSMISSION METHOD AND RELATED DEVICE**

(30) Priority: 30.06.2020 CN 202010614190
(71) Applicant: Huawei Technologies Co., Ltd., Longgang District Shenzhen, Guangdong 518129 (CN)
(72) Inventor: FU, Dawei, Shenzhen, Guangdong 518129 (CN); WANG, Mingyue, Shenzhen, Guangdong 518129 (CN)
(74) Representative: Huawei European IPR
(86) International application number: PCT/CN2021/103109
(87) International publication number: WO 2022/002051

(57) **Abstract**

A data transmission method and a related device are disclosed, and are used in the communications field. When an AP determines that a target ACK sent by a terminal device is not received, the AP sends a scheduling message to at least two other APs, and the AP sends a retransmission message immediately following the scheduling message. In this way, the AP and the plurality of APs transmit the retransmission message to achieve a downlink gain, thereby improving a success rate of sending a packet by the AP to the terminal device, and improving coverage performance of the AP for the terminal device.

## Description

This application claims priority to Chinese Patent Application No. 202010614190.1, filed with the China National Intellectual Property Administration on June 30, 2020 and entitled "DATA TRANSMISSION METHOD AND RELATED DEVICE", which is incorporated herein by reference in its entirety.

### TECHNICAL FIELD

This application relates to the communications field, and in particular, to a data transmission method and a related device.

### BACKGROUND

A wireless local area network (wireless local area network, WLAN) uses technologies including a multiple-input multiple-output (MIMO) technology, an orthogonal frequency division multiplexing (orthogonal frequency division multiplexing, OFDM) technology, and an orthogonal frequency division multiple access (orthogonal frequency division multiple access, OFDMA) technology.

However, with the development of technologies, some basic problems still do not have good solutions. Quality of a signal received by a terminal device located in some areas of a signal coverage area of a wireless access point (access point, AP) is relatively poor. A success rate of sending a packet by the AP to the terminal device is relatively low. If signal quality of the AP is improved by increasing AP power to improve the success rate of sending a packet by the AP to the terminal device and improve coverage performance of the AP for the terminal device, interference between APs is aggravated.

How to properly improve coverage performance of an AP for a terminal device is a difficult problem in the industry.

### SUMMARY

This application provides a data transmission method, to implement a downlink gain by transmitting a retransmission message by a plurality of APs, thereby improving a success rate of sending a packet by an AP to a terminal device, and improving coverage performance of the AP for the terminal device.

According to a first aspect of this application, a data transmission method is provided. An access point AP determines that a target acknowledge character (acknowledge character, ACK) sent by a terminal device is not received, and the target ACK is used to indicate that the terminal device successfully receives a target packet sent by the AP. The AP sends a scheduling message to at least two other APs, where the scheduling message includes the target packet, the scheduling message is used to indicate the at least two other APs to send retransmission messages to the terminal device, and the retransmission message includes the target packet. The AP sends the retransmission message immediately following the scheduling message.

In this application, when the AP determines that a target ACK sent by a terminal device is not received, the AP sends a scheduling message to at least two other APs, and the AP sends a retransmission message immediately following the scheduling message. In this way, the AP and the plurality of APs transmit the retransmission message to achieve a downlink gain, thereby improving a success rate of sending a packet by the AP to the terminal device, and improving coverage performance of the AP for the terminal device.

Based on the first aspect of this application, in an implementation of the first aspect of this application, a media access control service data unit (MAC service data unit, MSDU) of the scheduling message includes a retransmission indication, a configuration for sending the retransmission message, and the target packet.

In this possible implementation, the MSDU of the scheduling message includes the retransmission indication, the configuration for sending the retransmission message, and the target packet. Such an implementation may be applicable to the IEEE 802.11ax protocol draft. After receiving a physical layer protocol data unit (physical layer protocol data unit, PPDU), each AP may re-encode, after parsing a trigger frame (Trigger Frame) at a MAC middle layer, a target packet of a padding field to generate the retransmission message, and then send the retransmission message to the terminal device.

Based on the first aspect of this application, in an implementation of the first aspect of this application, the method further includes the following step:

The AP attempts to receive an ACK message, and the AP attempts to receive the ACK messages forwarded by the at least two other APs, where the ACK message is all or a part of the target ACK.

In this possible implementation, after the terminal device successfully receives the retransmission message, the terminal device sends the target ACK, and the another AP forwards, to the AP, the target ACK sent by the terminal device. The AP may attempt to receive the ACK message and attempt to receive the ACK messages forwarded by the at least two other APs.

Based on the first aspect of this application, in an implementation of the first aspect of this application, if the ACK message is a partial target ACK, the method further includes a following step: The AP combines the received ACK messages to obtain the target ACK.

In this possible implementation, the AP may further combine the received ACK messages to obtain the target ACK. The AP attempts to receive a plurality of ACK messages, and combines the ACK messages to obtain the target ACK, so as to achieve an uplink diversity gain, thereby improving a success rate of receiving the ACK message by the AP.

Based on the first aspect of this application, in a possible implementation of the first aspect of this application, a preamble of the scheduling message includes a retransmission indication and a configuration for sending the retransmission message, and an MSDU of the scheduling message includes the target packet.

In this possible implementation, the retransmission indication and the configuration of the retransmission message may be encoded in the preamble in a manner similar to that of an SIG field. Therefore, another AP may identify the scheduling message by using software at a physical (Physical, PHY) layer, and analyze the retransmission indication and the configuration of the retransmission message. The another AP may directly re-encode a decoding result in the PHY to generate the retransmission message, and deliver the retransmission message to a terminal device. In this application, another AP can decode a PPDU at the PHY without performing decoding at a media access control (Media Access Control, MAC) layer, thereby simplifying a scheduling procedure and improving a speed of processing the scheduling message by the another AP.

Based on the first aspect of this application, in an implementation of the first aspect of this application, a private information field in the configuration of the retransmission message includes at least two cyclic shift diversities CSDs corresponding to the at least two other APs. The at least two CSDs are used to indicate the at least two other APs to send the retransmission message based on the respective CSDs.

In this possible implementation, a user info field (User Info Field) is used to indicate a user-private-level configuration parameter, and the user info field may include related parameters including a cyclic shift diversity (cyclic shift diversity, CSD) of each antenna of each of other APs that can achieve an optimal downlink diversity gain, a received signal strength indication (Received Signal Strength Indication, RSSI), and the like. Each of the other APs can configure an antenna of the other APs based on a CSD received by the APs, to form MIMO with a plurality of other APs to achieve a downlink diversity gain.

Based on the first aspect of this application, in an implementation of the first aspect of this application, the method further includes the following step: The AP sends a frequency configuration message to one or more of the at least two other APs, where the frequency configuration message indicates the one or more APs to change to the same frequency as the AP.

In this possible implementation, the AP may further send a frequency configuration message to one or more of the at least two other APs, where the frequency configuration message indicates the one or more APs to change to the same frequency as the AP. In this way, the AP may schedule another AP that works on the same frequency as the AP to send the retransmission message to the terminal device, thereby improving efficiency of retransmitting the target packet.

According to a second aspect of this application, a data transmission method is provided. An AP receives a scheduling message sent by another AP, where the scheduling message includes a target packet, the scheduling message is used to indicate the AP to send a retransmission message to a terminal device, and the retransmission message includes the target packet. The AP sends the retransmission message to the terminal device based on the scheduling message.

In this application, when the AP receives the scheduling message sent by the another AP, the AP may send the retransmission message to the terminal device based on the scheduling message. When the AP receives a target ACK sent by the terminal device, the AP may send, to the another AP, the target ACK sent by the terminal device. In this way, a plurality of APs transmit retransmission messages to achieve a downlink diversity gain, and a plurality of APs forward ACK messages to achieve an uplink diversity gain. Further, a success rate of sending a packet between the another AP and a terminal device is improved, and coverage performance of the another AP for a signal of an edge user is improved.

Based on the second aspect of this application, in an implementation of the second aspect of this application, the method further includes the following step: The AP forwards, to the another AP, the target ACK sent by the terminal device.

In this possible implementation, after the terminal device successfully receives the retransmission message, the terminal device sends the target ACK, and the AP forwards, to the another AP, the target ACK sent by the terminal device. In this way, the another AP achieves an uplink gain.

Based on the second aspect of this application, in an implementation of the second aspect of this application, that the AP forwards, to the another AP, the target ACK sent by the terminal device includes: The AP skips performing integrity check on the target ACK sent by the terminal device, and the AP forwards the target ACK to the another AP.

In this possible implementation, the AP may skip performing integrity check on the target ACK sent by the terminal device, and the AP may directly forward the target ACK to another AP, to ensure that the AP can forward all or a part of the target ACK to the another AP, thereby achieving an uplink diversity gain.

According to a third aspect of this application, an AP is provided, and the AP is configured to perform the method according to the first aspect or any one of the possible implementations of the first aspect. Specifically, the AP includes modules or units configured to perform the method according to the first aspect or any one of the possible implementations of the first aspect.

According to a fourth aspect of this application, an AP is provided, and the AP is configured to perform the method according to the second aspect or any one of the possible implementations of the second aspect. Specifically, the AP includes modules or units configured to perform the method according to the second aspect or any one of the possible implementations of the second aspect.

According to a fifth aspect of this application, an AP is provided. The AP includes at least a radio frequency (radio frequency, RF) circuit and a processor.

The processor is configured to determine that a target ACK sent by a terminal device is not received, where the target ACK is used to indicate that the terminal device successfully receives a target packet sent by the AP.

The RF circuit is configured to send a scheduling message to at least two other APs, where the scheduling message includes the target packet, the scheduling message is used to indicate the at least two other APs to send retransmission messages to the terminal device, and the retransmission message includes the target packet.

The RF circuit is configured to:
send the retransmission message immediately following the scheduling message.

According to a sixth aspect of this application, an AP is provided. The AP includes at least a radio frequency (radio frequency, RF) circuit and a processor.

The RF circuit is configured to: receive a scheduling message sent by another AP, where the scheduling message includes a target packet, the scheduling message is used to indicate the AP to send a retransmission message to a terminal device, and the retransmission message includes the target packet.

The processor is configured to send the retransmission message to the terminal device based on the scheduling message.

According to a seventh aspect of this application, a computer storage medium is provided, and the computer storage medium stores instructions. When the instructions are executed on a computer, the computer is enabled to perform the method according to the first aspect or any one of the implementations of the first aspect; or perform the method according to the second aspect or any one of the implementations of the second aspect.

According to an eighth aspect of this application, a computer program product is provided. When the computer program product runs on a computer, the computer is enabled to perform the method according to the first aspect or any one of the implementations of the first aspect; or perform the method according to the second aspect or any one of the implementations of the second aspect.

### BRIEF DESCRIPTION OF DRAWINGS

FIG. 1 is a schematic diagram of an application scenario of a data transmission system according to this application;
FIG. 2 is a schematic flowchart of a data transmission method according to this application;
FIG. 3 is a schematic diagram of a structure of an MSDU of a scheduling message according to this application;
FIG. 4 is another schematic flowchart of a data transmission method according to this application;
FIG. 5 is a schematic diagram of a structure of a PPDU of a scheduling message according to this application;
FIG. 6 is another schematic flowchart of a data transmission method according to this application;
FIG. 7 is a schematic diagram of a structure of an AP according to this application;
FIG. 8 is a schematic diagram of another structure of an AP according to this application;
FIG. 9 is a schematic diagram of another structure of an AP according to this application; and
FIG. 10 is a schematic diagram of another structure of an AP according to this application.

### DESCRIPTION OF EMBODIMENTS

The following describes the technical solutions provided in this application with reference to accompanying drawings. A person of ordinary skill in the art may learn that, with development of technologies and emergence of new scenarios, the technical solutions provided in this application are also applicable to similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that the technical solutions described herein can be implemented in other orders than the order illustrated or described herein.

In the technical solutions provided in this application, the word "for example" is used to represent giving an example, an illustration, or a description. Any technical solution or design scheme described as "for example" in this application should not be explained as being more preferred or having more advantages than another technical solution or design solution. Exactly, use of words such as "for example" is intended to present a related concept in a specific manner for ease of understanding.

The rapid development of the mobile Internet is raising user requirements for mobile high-speed data access. As a low-cost and high-bandwidth wireless access technology, the wireless local area network (WLAN) is widely deployed and used in the carrier, enterprise, and home markets, and plays an important role in relieving data traffic pressure in hotspot areas.

For the foregoing problem, this application provides a data transmission method and a related device. When an AP determines that a target acknowledge character ACK sent by a terminal device is not received, the AP sends a scheduling message to at least two APs, and the AP sends a retransmission message immediately following the scheduling message. If the terminal device successfully receives the retransmission message, the AP attempts to receive an ACK message and attempts to receive the ACK messages forwarded by the at least two other APs. In this way, a plurality of APs transmit retransmission messages to achieve a downlink diversity gain, and a plurality of APs forward ACK messages to achieve an uplink diversity gain. Further, a success rate of sending a packet between an AP and a terminal device is improved, and coverage performance of the AP for an edge user is improved.

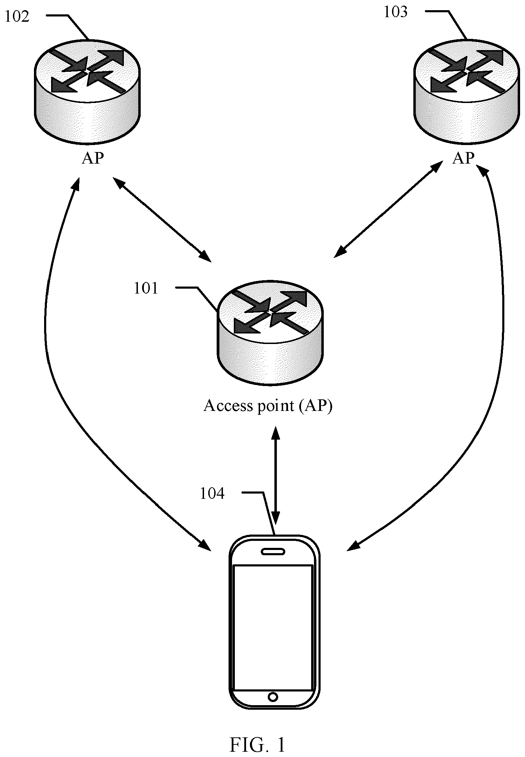

FIG. 1 is a schematic diagram of an application scenario of a data transmission system according to this application.

Refer to FIG. 1. In this application, an AP 101, an AP 102, an AP 103, and a terminal device 104 form a data transmission system.

The data transmission system provided in this application includes the AP 101, the AP 102, the AP 103, and the terminal device 104.

The AP 101 exchanges data with each of the AP 102 and the AP 103. The AP 101, the AP 102, and the AP 103 each exchange data with the terminal device 104.

In this application, the AP 101, the AP 102, the AP 103, and one terminal device 104 are merely used as an example for description. In actual application, optionally, an application scenario of this application may include more APs than those provided in FIG. 1 and more terminal devices than those provided in FIG. 1.

In a data transmission system, a terminal device is generally a client. The terminal device may be mobile or fixed, and is a basic component unit of a wireless local area network. Optionally, the terminal device may be a computer on which a wireless network interface card is installed, or the terminal device may be a smartphone with a WLAN module, or the terminal device may be another network-related device. This is not specifically limited herein.

An AP is a typical application of a wireless local area network. The AP is a bridge between a wireless network and a wired network, and is a core device for constructing a wireless local area network. The AP mainly provides mutual access between a wireless workstation and a wired network. In this way, terminal devices in a signal coverage area of the AP may communicate with each other by using the AP.

In this application, when the AP determines that a target ACK sent by a terminal device is not received, the AP sends a scheduling message to at least two other APs, and the AP sends a retransmission message immediately following the scheduling message. In this way, the AP and the plurality of APs transmit the retransmission message to implement a downlink gain, thereby improving a success rate of sending a packet by the AP to the terminal device, and improving coverage performance of the AP for the terminal device.

Based on the data transmission system described in FIG. 1, the data transmission method provided in this application is described.

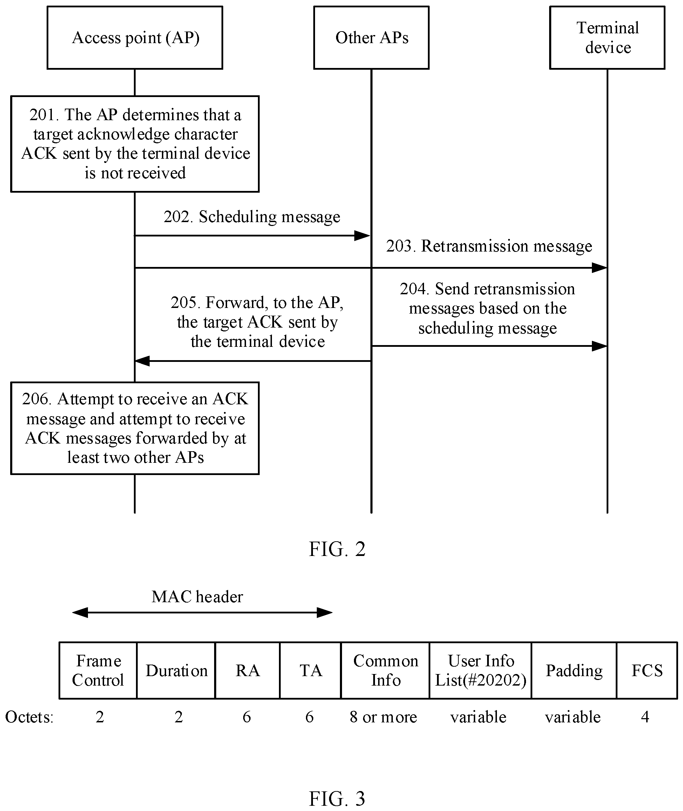

FIG. 2 is a schematic flowchart of the data transmission method according to this application.

Refer to FIG. 2. An example of the data transmission method provided in this application includes step 201 to step 206.

201. An AP determines that an ACK sent by a terminal device is not received.

In a data communication process, an ACK is a transmission control character sent by a receiving station to a sending station, and the ACK indicates that the receiver successfully receives data sent by the sender. In the Transmission Control Protocol (Transmission Control Protocol, TCP) or the Internet Protocol (IP), if a receiver successfully receives data, the receiver returns an ACK signal. Generally, the ACK signal has its own fixed format and length, and is replied by the receiver to the sender.

In this application, the AP may be the AP 101 shown in FIG. 1, and a target ACK is used to indicate that the terminal device successfully receives a target packet sent by the AP. When the AP determines that the target ACK sent by the terminal device is not received, the AP may consider that the terminal device does not successfully receive the target packet sent by the AP. In this way, the AP may retransmit, to the terminal device in different manners, the target packet that fails to be received by the terminal device previously.

202. The AP sends a scheduling message to at least two other APs, and correspondingly, the other APs receive the scheduling message sent by the AP.

In this application, the at least two other APs may be APs around the AP. For example, the AP may be the AP 101 shown in FIG. 1, and the other APs may be the AP 102 and the AP 103 shown in FIG. 1. The scheduling message includes the target packet, the scheduling message is used to indicate the at least two other APs to send retransmission messages to the terminal device, and the retransmission message includes the target packet.

203. The AP sends the retransmission message immediately following the scheduling message.

In this application, after sending the scheduling message to the at least two APs, the AP further sends a retransmission message to the terminal device. In this way, a success rate of successfully receiving the target packet by the terminal device is improved. The AP sending the retransmission message immediately following the scheduling message means that there is no other packet between the scheduling message and the retransmission message, but does not mean that there is no time interval between the scheduling message and the retransmission message.

204. The other APs send retransmission messages to the terminal device based on the scheduling message.

In this application, after receiving the scheduling message, the other APs may send the retransmission message to the terminal device based on an indication of the scheduling message. The AP and the other APs may wait for a jointly agreed time to send the retransmission message. For example, after the AP 102 and the AP 103 receive the scheduling message sent by the AP 101, the AP 101, the AP 102, and the AP 103 may send the retransmission message to the terminal device together after a short interframe space (short interframe space, SIFS). Optionally, the jointly agreed time may be an SIFS, or may be another time interval. This is not specifically limited herein.

In this way, the AP and a plurality of other APs send same retransmission messages to the terminal device, and signals of these retransmission messages are superimposed on the terminal device, so that a downlink gain can be implemented, and a success rate of successfully receiving the target packet by the terminal device can be improved.

205. The other APs forward, to the AP, the target ACK sent by the terminal device.

In this application, after the terminal device successfully receives the retransmission message, the terminal device sends the target ACK, and the other APs forward, to the AP, the target ACK sent by the terminal device. A plurality of other APs send the target ACK to the AP, so that an uplink diversity gain can be achieved, thereby improving a success rate of receiving an ACK message by the AP.

206. The AP attempts to receive an ACK message and attempts to receive ACK messages forwarded by the at least two other APs.

In this application, the ACK message is all or a part of the target ACK.

In this application, when the AP sends the scheduling message to the at least two other APs, the scheduling message may be in different forms. Optionally, an MSDU of the scheduling message may include a retransmission indication, a configuration for sending the retransmission message, and the target packet. A preamble of the scheduling message may include a retransmission indication and a configuration for sending the retransmission message, and an MSDU of the scheduling message includes the target packet. A specific implementation is described in detail below.

FIG. 3 is a schematic diagram of a structure of an MSDU of a scheduling message according to this application.
1. An MSDU of a scheduling message includes a retransmission indication, a configuration for sending the retransmission message, and a target packet.

Refer to FIG. 3. In this application, an MSDU of a scheduling message that is sent by an AP and that is received by another AP includes a retransmission indication. The retransmission indication may include an identity (Identity, ID) of the another AP. The retransmission indication may further include other content. This is not specifically limited herein. The retransmission indication indicates the another AP to send the retransmission message to a terminal device.

In this application, the MSDU of the scheduling message may use a ready-made trigger (Trigger) frame in a protocol. Optionally, a PPDU of the scheduling message may be a non-high-throughput (non high-throughput, NonHT) frame, a high-throughput (high-throughput, HT) frame, a very high-throughput (very high-throughput, VHT) frame, or a high efficiency (high efficiency, HE) frame. This is not specifically limited herein.

In this application, after receiving the scheduling message sent by the AP, the another AP determines, based on a status of the another AP, whether to be scheduled by the AP. When the another AP determines to be scheduled by the AP, the another AP sends the retransmission message to the terminal device. Because an object to which each of the other scheduled APs sends the retransmission message is the terminal device rather than the AP, the PPDU of the retransmission message may be a NonHT frame, an HT frame, a VHT frame, a HE frame, or the like. This is not specifically limited herein. Frame formats used when other APs send retransmission messages to the terminal device are the same.

For example, an example in which the MSDU of the scheduling message uses a ready-made trigger frame in a protocol is used for description. FIG. 3 shows a complete trigger frame architecture (Trigger frame). Some fields in the trigger frame are used to indicate the configuration of retransmission information. Similar to the protocol,
in this application, an RA field stores a public broadcast MAC address, and a TA field stores a MAC address of the AP.

In this application, a common info field (Common Info Field) is used to indicate a common configuration parameter used when another AP is scheduled for downlink sending. Optionally, the common info field may include related configuration parameters that are used when a retransmission message is sent, including a channel bandwidth, a guard interval (guard interval, GI), and a modulation and coding scheme (Modulation and Coding Scheme, MCS) value. The common info field may further include related configuration parameters such as a scheduling enable flag bit and a PPDU format (PPDU Format). The common info field may further include another configuration parameter. This is not specifically limited herein.

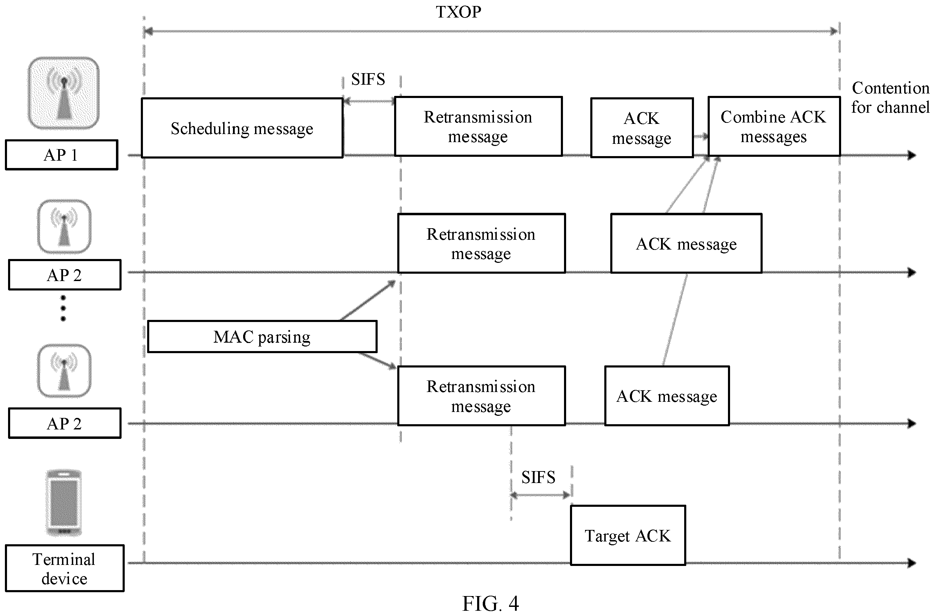

FIG. 4 is a schematic flowchart of a data transmission method according to this application.

Refer to FIG. 4. In this application, a user info field (User Info Field) is used to indicate a user-private-level configuration parameter, and the user info field may include related parameters including a cyclic shift diversity (cyclic shift diversity, CSD) of each antenna of each of other APs that can implement an optimal downlink diversity gain, a received signal strength indication (Received Signal Strength Indication, RSSI), and the like. Each of the other APs can configure an antenna of the other APs based on a CSD received by the APs, to form MIMO with a plurality of other APs to achieve a downlink diversity gain. The user info field may further include another configuration parameter. This is not specifically limited herein.

In this application, a padding field may be used to indicate a target packet that needs to be resent by the AP to the terminal device. The target packet that needs to be resent may be directly stored in the padding field without any parsing.

In this application, an MSDU of a scheduling message includes a retransmission indication, a configuration for sending the retransmission message, and a target packet. Such an implementation may be applicable to the Institute of Electrical and Electronics Engineers (Institute of Electrical and Electronics Engineers, IEEE) 802.11ax protocol draft. After receiving the PPDU, each of the other APs may re-encode, after parsing the trigger frame at a MAC middle layer, the target packet of the padding field to generate a retransmission message, and then send the retransmission message to a terminal device.

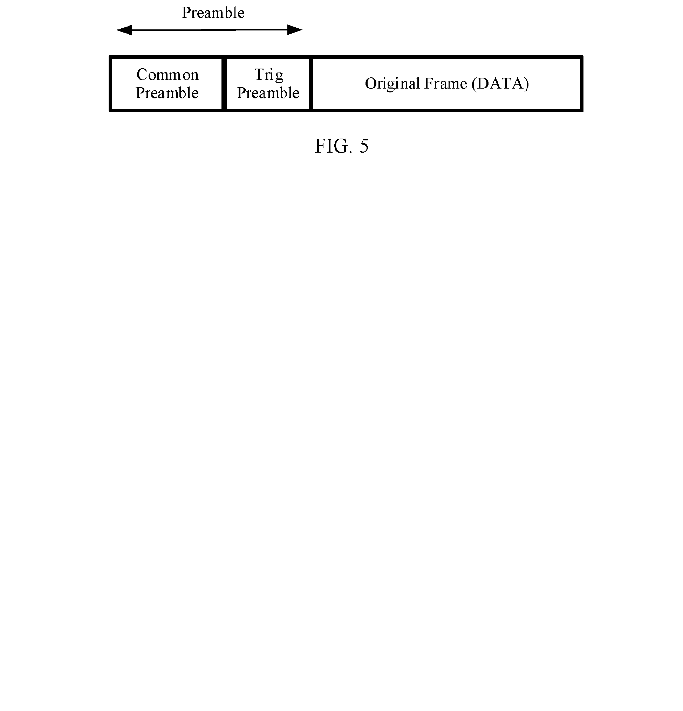

FIG. 5 is a schematic diagram of a structure of a PPDU of a scheduling message according to this application.

2. A preamble of the scheduling message includes a retransmission indication and a configuration for sending the retransmission message, and an MSDU of the scheduling message includes a target packet.

Refer to FIG. 4. In this application, a preamble of a scheduling message may include a retransmission indication. For example, the retransmission indication may be a scheduling trigger bit, or the retransmission indication may be another type of indication. This is not specifically limited herein.

For example, in FIG. 4, in this application, the preamble of the scheduling message may further include a configuration of the retransmission message. Configuration information of the retransmission message is similar to the configuration content indicated by the common info field and the user info field described above. Details are not described herein again.

In this application, a DATE field of the scheduling message includes a complete target packet.

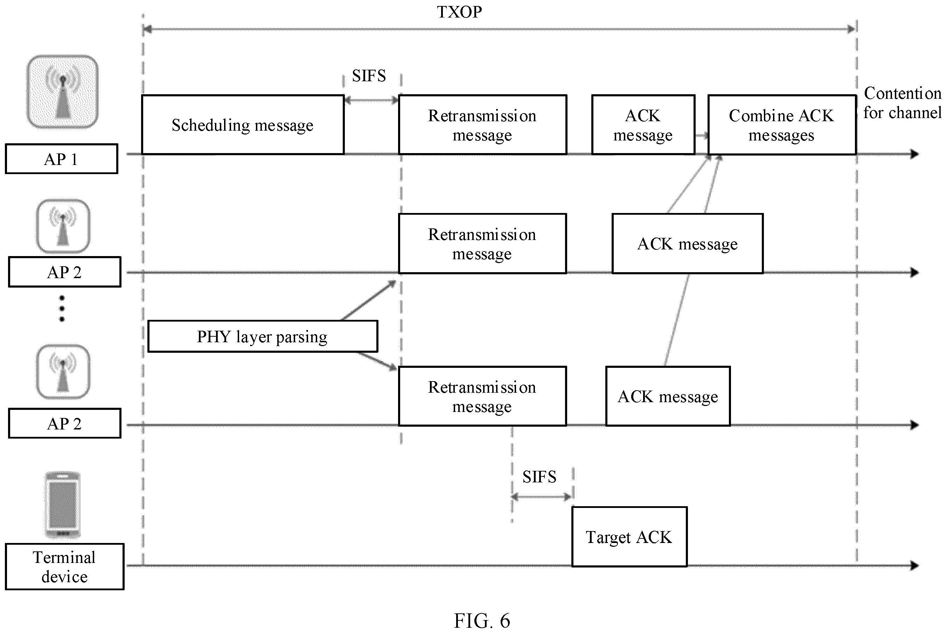

FIG. 6 is another schematic flowchart of a data transmission method according to this application.

Refer to FIG. 6. In this application, a retransmission indication and the configuration of the retransmission message may be encoded in a preamble in a manner similar to that of an SIG field. Therefore, another AP may identify the scheduling message by using software at a PHY layer, and analyze the retransmission indication and the configuration of the retransmission message. The another AP may directly re-encode a decoding result in the PHY to generate the retransmission message, and deliver the retransmission message to a terminal device. Because a quality requirement of a channel used for communication between the AP and another AP is generally not high, a proper low-order modulation and coding scheme (Modulation and Coding Scheme, MCS) needs to be used to ensure correctness of an original scrambled packet on which no MAC frame check sequence (frame check sequence, FCS) check is performed. In this application, another AP can decode the PPDU at the PHY without performing decoding at the MAC layer, thereby simplifying a scheduling procedure and improving a speed of processing a scheduling message by the another AP.

In this application, the another AP may configure, in a chip of the another AP, a basic service set identifier (Basic Service Set Identifier, BSSID) of the AP that sends the scheduling message, so that the another AP can receive an ACK message sent by the terminal device.

In this application, in addition to step 201 to step 206 shown in the foregoing technical solutions, the AP may further send a frequency configuration message to one or more of the at least two other APs, where the frequency configuration message indicates the one or more other APs to change to the same frequency as the AP. In this way, the AP may schedule another AP that works on the same frequency as the AP to send the retransmission message to the terminal device, thereby improving feasibility of this solution.

In this application, step 205 has a specific implementation. After the another AP receives a target ACK, the another AP may skip performing integrity check on the target ACK sent by the terminal device, and the another AP directly forwards the target ACK to the AP, to ensure that the another AP can forward all or a part of the target ACK to the AP, thereby achieving an uplink gain.

In this application, in addition to step 201 to step 206 shown in the foregoing technical solution, the AP can further combine all received ACK messages to obtain the target ACK.

In this application, after the terminal device successfully receives the retransmission message, the terminal device sends the target ACK, and the another AP forwards, to the AP, the target ACK sent by the terminal device. There are two forwarding manners: a wired manner and a wireless manner. Optionally, when forwarding is performed in the wired manner, each of the other APs continues to transparently transmit, in an uplink manner, a part of complete ACK data obtained through descrambling to the AP. The AP may combine a plurality of received ACKs from a same source by using a noise reduction algorithm, to obtain, through processing, a complete ACK that can pass FCS check. Optionally, when forwarding is performed in the wireless manner, after receiving an ACK at a bottom layer, each of the other APs sends the ACK through a radio frequency port in a manner of power amplification or encoding and forwarding, and the AP combines all received ACK messages. In this way, a power gain or an uplink diversity gain for receiving an ACK by the AP is increased, and an FCS check pass rate is increased.

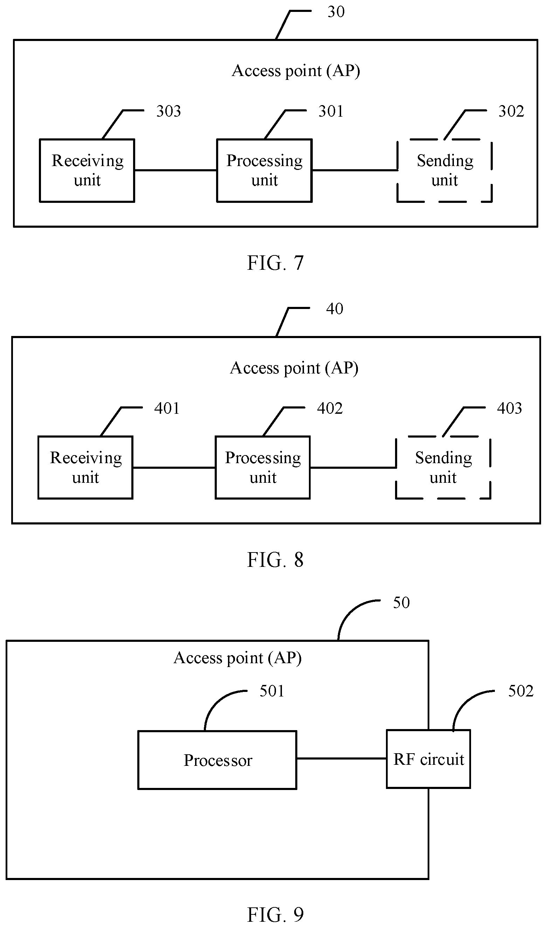

The foregoing technical solutions provide different implementations of a data transmission method. The following provides an AP 30. As shown in FIG. 7, the AP 30 is configured to perform steps performed by the AP in the foregoing technical solutions. For details about the performance steps and corresponding beneficial effects, refer to the foregoing corresponding technical solutions for understanding, and details are not described herein again. The AP 30 includes:
a processing unit 301, configured to determine that a target acknowledge character ACK sent by a terminal device is not received, where the target ACK is used to indicate that the terminal device successfully receives a target packet sent by the AP; and
a sending unit 302, configured to:
   send a scheduling message to at least two other APs, where the scheduling message includes the target packet, the scheduling message is used to indicate the at least two other APs to send retransmission messages to the terminal device, and the retransmission message includes the target packet; and
   send the retransmission message immediately following the scheduling message.

In a specific implementation,
a receiving unit 303 is further configured to receive an ACK message, and attempt to receive the ACK messages forwarded by the at least two other APs, where the ACK message is all or a part of the target ACK.

In a specific implementation, if the ACK message is a partial target ACK,
the receiving unit 303 is further configured to combine the received ACK messages to obtain the target ACK.

In a specific implementation, a media access control service data unit MSDU of the scheduling message includes a retransmission indication, a configuration for sending the retransmission message, and the target packet.

In a specific implementation, a preamble of the scheduling message includes a retransmission indication and a configuration for sending the retransmission message, and an MSDU of the scheduling message includes the target packet.

In a specific implementation, a private information field in the configuration of the retransmission message includes at least two cyclic shift diversities (CSD) corresponding to the at least two other APs, and the at least two CSDs are used to indicate the at least two other APs to send the retransmission message based on the respective CSDs.

In a specific implementation,
the sending unit 302 is further configured to: send a frequency configuration message to one or more of the at least two other APs, where the frequency configuration message indicates the one or more APs to change to the same frequency as the AP.

It should be noted that, because content such as information exchange and an execution process between the modules of the AP 30 is based on a same concept as the technical solutions described in the data transmission method in this application, technical effects brought by the content are the same as technical effects produced by the method in the present invention, for specific content, refer to the descriptions in the foregoing technical solutions of this application. Details are not described herein again.

The foregoing technical solutions provide different implementations of an AP 30. The following provides an AP 40. As shown in FIG. 8, the AP 40 is configured to perform steps performed by the AP in the foregoing technical solutions. For details about the performance steps and corresponding beneficial effects, refer to the foregoing corresponding technical solutions for understanding, and details are not described herein again. The AP 40 includes:
a receiving unit 401, configured to receive a scheduling message sent by another AP, where the scheduling message includes a target packet, the scheduling message is used to indicate the AP to send a retransmission message to a terminal device, and the retransmission message includes the target packet; and
a processing unit 402, configured to send the retransmission message to the terminal device based on the scheduling message.

In a specific implementation,
a sending unit 403 is further configured to forward, to the another AP, a target ACK sent by the terminal device.

In a specific implementation,
the processing unit 402 is configured to skip performing integrity check on the target ACK sent by the terminal device.

The sending unit 403 is configured to forward the target ACK to the another AP.

It should be noted that, because content such as information exchange and an execution process between the modules of the AP 40 is based on a same concept as the technical solutions described in the data transmission method in this application, technical effects brought by the content are the same as technical effects produced by the method in the present invention, for specific content, refer to the descriptions in the foregoing technical solutions of this application. Details are not described herein again.

The foregoing technical solutions provide different implementations of an AP 40. The following provides an AP 50. As shown in FIG. 9, the AP 50 is configured to perform steps performed by the AP in the foregoing technical solutions. For details about the performance steps and corresponding beneficial effects, refer to the foregoing corresponding technical solutions for understanding, and details are not described herein again. What is included in the AP 50 is as follows.

Refer to FIG. 9. FIG. 9 is a schematic diagram of another structure of an AP according to this application.

As shown in FIG. 9, the AP 50 includes a processor 501 and an RF circuit 502. The RF circuit is also referred to as an RF module. The AP may be the AP 101 mentioned in FIG. 1, or the AP may be the AP 1 mentioned in FIG. 2.

The processor 501 is configured to determine that a target acknowledge character ACK sent by a terminal device is not received, where the target ACK is used to indicate that the terminal device successfully receives a target packet sent by the AP.

The RF circuit 502 is configured to:
send a scheduling message to at least two other APs, where the scheduling message includes the target packet, the scheduling message is used to indicate the at least two other APs to send retransmission messages to the terminal device, and the retransmission message includes the target packet; and
send the retransmission message immediately following the scheduling message.

In a possible implementation,
the RF circuit 502 is configured to attempt to receive an ACK message and attempt to receive the ACK messages forwarded by the at least two other APs, where the ACK message is all or a part of the target ACK, and the ACK message is used to indicate the first AP to obtain the target ACK based on the ACK message.

In a possible implementation,
if the ACK message is a partial target ACK,
the RF circuit 502 is further configured to combine the received ACK messages to obtain the target ACK.

In a possible implementation, a media access control service data unit MSDU of the scheduling message includes a retransmission indication, a configuration for sending the retransmission message, and the target packet.

In a possible implementation, a preamble of the scheduling message includes a retransmission indication and a configuration for sending the retransmission message, and an MSDU of the scheduling message includes the target packet.

In a possible implementation, a private information field in the configuration of the retransmission message includes at least two cyclic shift diversities (CSD) corresponding to the at least two other APs, and the at least two CSDs are used to indicate the at least two other APs to send the retransmission message based on the respective CSDs.

In a possible implementation,
the processor 501 is further configured to combine all of the received ACK messages to obtain the target ACK.

In a possible implementation,
the RF circuit 502 is further configured to: send a frequency configuration message to one or more of the at least two other APs, where the frequency configuration message indicates the one or more APs to change to the same frequency as the AP.

The processor 501 may be an application-specific integrated circuit (application-specific integrated circuit, ASIC), or a digital signal processor (digital signal processor, DSP), or a baseband chip, or may be another chip with a specific processing function, for example, may be a central processing unit (central processing unit, CPU) or a network processor (network processor, NP), or a field-programmable gate array (field-programmable gate array, FPGA), or any combination thereof. The processor 501 may be one processor, or may include a plurality of processors.

The RF circuit 502 is also referred to as an RF module, and is a hardware electronic component configured to receive and/or send a radio signal between devices. Particularly, after receiving uplink information of the terminal device or another AP, the RF circuit 502 sends the uplink information to the processor 501 for processing. In addition, the RF circuit 502 sends designed downlink data to the terminal device or the another AP. Generally, the RF circuit 502 includes but is not limited to an antenna, at least one amplifier, a transceiver, a coupler, a low noise amplifier (low noise amplifier, LNA), a duplexer, and the like.

The AP 50 may further include a memory. The memory may be disposed inside the processor 501, or may be disposed outside the processor 501. The memory stores the following elements: an executable module or a data structure, or a subset thereof, or an extended set thereof:
operation instructions, including various operation instructions and used to implement various operations; and
an operating system, including various system programs and configured to implement various basic services and process a hardware-based task.

In this embodiment, the processor 501 may further generate the scheduling message by invoking an element of the memory.

In addition, the processor 501 may further perform all operations that may be performed by the AP 1, for example, an operation performed by the AP 1 in the embodiment corresponding to FIG. 2.

It should be noted that, because content such as information exchange and an execution process between the modules of the AP 50 is based on a same concept as the technical solutions described in the data transmission method in this application, technical effects brought by the content are the same as technical effects produced by the method in the present invention, for specific content, refer to the descriptions in the foregoing technical solutions of this application. Details are not described herein again.

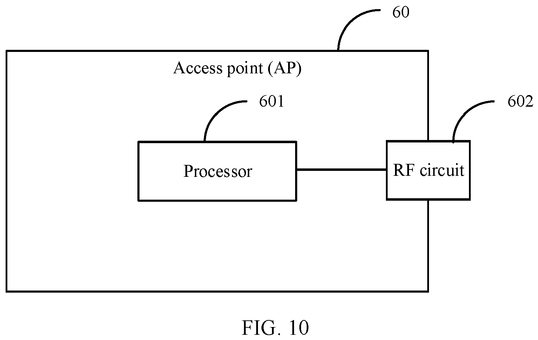

Refer to FIG. 10. FIG. 10 is a schematic diagram of another structure of an AP according to this application.

As shown in FIG. 10, an AP 60 includes a processor 601 and an RF circuit 602. The RF circuit is also referred to as an RF module. The AP may be the AP 102 and the AP 103 mentioned in FIG. 1, or the AP may be the another AP mentioned in FIG. 2.

The RF circuit 602 is configured to receive a scheduling message sent by another AP, where the scheduling message includes a target packet, the scheduling message is used to indicate the AP to send a retransmission message to a terminal device, and the retransmission message includes the target packet.

The processor 601 is configured to send the retransmission message to the terminal device based on the scheduling message.

In a possible implementation,
the RF circuit 602 is further configured to forward, to the another AP, a target ACK sent by the terminal device.

In a possible implementation,
the processor 601 is configured to skip performing integrity check on the target ACK sent by the terminal device.

The RF circuit 602 is configured to forward the target ACK to the another AP.

The processor 601 may be an application-specific integrated circuit (application-specific integrated circuit, ASIC), or a digital signal processor (digital signal processing, DSP), or a baseband chip, or may be another chip with a specific processing function, for example, may be a central processing unit (central processing unit, CPU) or a network processor (network processor, NP), or a field-programmable gate array (field-programmable gate array, FPGA), or any combination thereof. The processor 601 may be one processor or may include a plurality of processors.

The RF circuit 602 is also referred to as an RF module, and is a hardware electronic component configured to receive and/or send a radio signal between devices. Particularly, after receiving uplink information of the terminal device or another AP, the RF circuit 602 sends the uplink information to the processor 601 for processing. In addition, the RF circuit 602 sends designed downlink data to the terminal device or the another AP. Generally, the RF circuit 602 includes but is not limited to an antenna, at least one amplifier, a transceiver, a coupler, a low noise amplifier (low noise amplifier, LNA), a duplexer, and the like.

The AP 60 may further include a memory. The memory may be disposed inside the processor 601, or may be disposed outside the processor 601. The memory stores the following elements: an executable module or a data structure, or a subset thereof, or an extended set thereof:
operation instructions, including various operation instructions and used to implement various operations; and
an operating system, including various system programs and configured to implement various basic services and process a hardware-based task.

In this embodiment, the processor 601 may further generate the retransmission message by invoking an element of the memory.

In addition, the processor 601 may further perform all operations that may be performed by the another AP, for example, an operation performed by the another AP in the embodiment corresponding to FIG. 2.

It should be noted that, because content such as information exchange and an execution process between the modules of the AP 60 is based on a same concept as the technical solutions described in the data transmission method in this application, technical effects brought by the content are the same as technical effects produced by the method in the present invention, for specific content, refer to the descriptions in the foregoing technical solutions of this application. Details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

This application further provides a chip system. The chip system includes a processor, configured to support the foregoing forwarding device or control device to implement functions related to the forwarding device or control device, for example, receiving or processing the packet and/or information in the foregoing method embodiments. In a possible design, the chip system further includes a memory. The memory is configured to store program instructions and data that are necessary for a computer device. The chip system may include a chip, or may include a chip and another discrete component.

All or some of the foregoing technical solutions may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or a part contributing to the prior art, or all or some of the technical solutions may be implemented in the form of a software product. The computer software product is stored in a storage medium and includes several instructions for instructing a computer device (which may be a personal computer, a server, or another network device) to perform all or some of the steps of the methods in the technical solutions of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

In conclusion, the foregoing technical solutions are merely intended for describing the technical solutions of this application, but not for limiting this application. Although this application is described in detail with reference to the foregoing technical solutions, persons of ordinary skill in the art should understand that they may still make modifications to the technical solutions described in the foregoing technical solutions or make equivalent replacements to some technical features thereof, without making the corresponding technical solutions depart from the scope of the claims.

## Claims

1. A data transmission method, comprising:
determining, by an access point (AP), that a target acknowledge character (ACK) sent by a terminal device is not received, wherein the target ACK is used to indicate that the terminal device successfully receives a target packet sent by the AP;
sending, by the AP, a scheduling message to at least two other APs, wherein the scheduling message comprises the target packet, the scheduling message is used to indicate the at least two other APs to send retransmission messages to the terminal device, and the retransmission message comprises the target packet; and
sending, by the AP, the retransmission message immediately following the scheduling message.

2. The data transmission method according to claim 1, wherein the method further comprises:
attempting, by the AP, to receive an ACK message, and attempting, by the AP, to receive the ACK messages forwarded by the at least two other APs, wherein the ACK message is all or a part of the target ACK.

3. The data transmission method according to claim 2, wherein if the ACK message is a part of the target ACK, the method further comprises:
combining, by the AP, the received ACK messages to obtain the target ACK.

4. The data transmission method according to any one of claims 1 to 3, wherein a media access control service data unit (MSDU) of the scheduling message comprises a retransmission indication, a configuration for sending the retransmission message, and the target packet.

5. The data transmission method according to any one of claims 1 to 3, wherein a preamble of the scheduling message comprises a retransmission indication and a configuration for sending the retransmission message, and an MSDU of the scheduling message comprises the target packet.

6. The data transmission method according to claim 4 or 5, wherein a private information field in the configuration of the retransmission message comprises at least two cyclic shift diversities (CSD) corresponding to the at least two other APs, and the at least two CSDs are used to indicate the at least two other APs to send the retransmission message based on the respective CSDs.

7. The data transmission method according to any one of claims 1 to 6, wherein the method further comprises:
sending, by the AP, a frequency configuration message to one or more of the at least two other APs, wherein the frequency configuration message indicates the one or more APs to change to the same frequency as the AP.

8. A data transmission method, comprising:
receiving, by an access point (AP), a scheduling message sent by another AP, wherein the scheduling message comprises a target packet, the scheduling message is used to indicate the AP to send a retransmission message to a terminal device, and the retransmission message comprises the target packet; and
sending, by the AP, the retransmission message to the terminal device based on the scheduling message.

9. The data transmission method according to claim 8, wherein the method further comprises:
forwarding, by the AP to the another AP, a target acknowledge character (ACK) sent by the terminal device.

10. The data transmission method according to claim 9, wherein the forwarding, by the AP to the another AP, a target ACK sent by the terminal device comprises:
skipping, by the AP, performing integrity check on the target ACK sent by the terminal device; and
forwarding, by the AP, the target ACK to the another AP.

11. An access point (AP), comprising:
a processing unit, configured to determine that a target acknowledge character (ACK) sent by a terminal device is not received, wherein the target ACK is used to indicate that the terminal device successfully receives a target packet sent by the AP;
a sending unit, configured to:
send a scheduling message to at least two other APs, wherein the scheduling message comprises the target packet, the scheduling message is used to indicate the at least two other APs to send retransmission messages to the terminal device, and the retransmission message comprises the target packet; and
send the retransmission message immediately following the scheduling message.

12. The AP according to claim 11, wherein
a receiving unit is configured to attempt to receive an ACK message, and attempt to receive the ACK messages forwarded by the at least two other APs, wherein the ACK message is all or a part of the target ACK.

13. The AP according to claim 12, wherein if the ACK message is a part of the target ACK, the receiving unit is further configured to combine the received ACK messages to obtain the target ACK.

14. The AP according to any one of claims 11 to 13, wherein a media access control service data unit (MSDU) of the scheduling message comprises a retransmission indication, a configuration for sending the retransmission message, and the target packet.

15. The AP according to any one of claims 11 to 13, wherein a preamble of the scheduling message comprises a retransmission indication and a configuration for sending the retransmission message, and an MSDU of the scheduling message comprises the target packet.

16. The AP according to claim 14 or 15, wherein a private information field in the configuration of the retransmission message comprises at least two cyclic shift diversities (CSD) corresponding to the at least two other APs, and the at least two CSDs are used to indicate the at least two other APs to send the retransmission message based on the respective CSDs.

17. The AP according to claims 11 to 16, wherein
the sending unit is further configured to: send a frequency configuration message to one or more of the at least two other APs, wherein the frequency configuration message indicates the one or more APs to change to the same frequency as the AP.

18. An access point (AP), comprising:
a receiving unit, configured to receive a scheduling message sent by another AP, wherein the scheduling message comprises a target packet, the scheduling message is used to indicate the AP to send a retransmission message to a terminal device, and the retransmission message comprises the target packet; and
a processing unit, configured to send the retransmission message to the terminal device based on the scheduling message.

19. The AP according to claim 17, wherein
a sending unit is further configured to forward, to the another AP, a target ACK sent by the terminal device.

20. The AP according to claim 19, wherein
the processing unit is configured to skip performing integrity check on the target ACK sent by the terminal device; and
the sending unit is configured to forward the target acknowledge character (ACK) to the another AP.

21. An access point (AP), comprising a radio frequency (RF) circuit and a processor, wherein
the processor is configured to determine that a target acknowledge character (ACK) sent by a terminal device is not received, wherein the target ACK is used to indicate that the terminal device successfully receives a target packet sent by the AP;
the RF circuit is configured to send a scheduling message to at least two other APs, wherein the scheduling message comprises the target packet, the scheduling message is used to indicate the at least two other APs to send retransmission messages to the terminal device, and the retransmission message comprises the target packet; and
the RF circuit is configured to:
send the retransmission message immediately following the scheduling message.

22. An access point (AP), comprising a radio frequency (RF) circuit and a processor, wherein
the RF circuit is configured to: receive a scheduling message sent by another AP, wherein the scheduling message comprises a target packet, the scheduling message is used to indicate the AP to send a retransmission message to a terminal device, and the retransmission message comprises the target packet; and
the processor is configured to send the retransmission message to the terminal device based on the scheduling message.
